# EUROPÄISCHE PATENTANMELDUNG

(11) **EP 4 835 225 A1**
(43) Veröffentlichungstag der Anmeldung: **04.11.2026**
(21) Anmeldenummer: 26166450.2
(22) Anmeldetag: 20.03.2026
(51) Int. Cl.: E04F 21/08, A47L 11/38, B62D 57/024

(54) **VORRICHTUNG ZUR BEARBEITUNG EINES GEBÄUDES**

(30) Priorität: 21.03.2025 AT 502002025
(71) Anmelder: Gaggl, Martin, 2731 Saubersdorf (AT)
(72) Erfinder: Gaggl, Martin, 2731 Saubersdorf (AT)
(74) Vertreter: SONN Patentanwälte GmbH & Co KG

(57) **Zusammenfassung**

Eine Vorrichtung zur Bearbeitung eines Gebäudes (17), insbesondere einer Wand (16) eines Gebäudes (17), die Vorrichtung (1) umfasst einen Rahmen (2) mit zumindest einer am Rahmen (2) festgelegten Werkzeugeinheit (11) sowie eine Mehrzahl von am Rahmen (2) angreifenden und unabhängig voneinander verschwenkbaren Trägerarmen (3) zur Festlegung und Abstützung des Rahmens (2) am Gebäude (17), wobei die Trägerarme (3) jeweils ein Verbindungselement (8) aufweisen, und die Verbindungselemente (8) jeweils mit einem Wandanker (9) aus einer Mehrzahl von Wandankern (9) der Vorrichtung (1) lösbar verbindbar sind, wobei die Wandanker (9) zur Verankerung am Gebäude (17) ausgebildet sind.

## Beschreibung

Die vorliegende Erfindung betrifft eine Vorrichtung zur Bearbeitung eines Gebäudes, insbesondere einer Wand, wie z.B. einer Außenwand eines Gebäudes.

Um die Außenwände von Gebäuden bearbeiten zu können, insbesondere um an den Außenwänden von Gebäuden Verputz, Farbe, Dämmmaterial, Bohrungen und dergleichen anbringen zu können, ist es insbesondere dann, wenn Außenwände von Gebäuden mehr oder weniger zur Gänze bearbeitet werden sollen, in der Regel notwendig, das Gebäude an seiner Außenseite mit einem Baugerüst zu umgeben, um es Arbeitern zur ermöglichen, die gesamte Außenwand des Gebäudes erreichen zu können. Die Arbeiter können dann die verschiedenen Arbeiten, wie sie bei der Errichtung von Gebäuden oder aber auch bei der Sanierung, insbesondere beim Anbringen von Dämmmaterial, nötig werden, ausführen, indem sie sich auf dem Gerüst bewegen.

Die Kosten, die hierbei in der Regel für das Anmieten, den Transport, den Unterhalt und die Sicherung sowie den Ausbau des Baugerüsts anfallen, sind mitunter erheblich und können einen beträchtlichen Anteil an den Gesamtkosten eines Bauprojekts oder der Sanierung eines Gebäudes ausmachen.

Es wurden daher im Stand der Technik bereits Robotervorrichtungen vorgeschlagen, die sich auf den Außenwänden von Gebäuden bewegen können, um verschiedene Tätigkeiten auszuführen. So zeigt die Veröffentlichungsschrift EP 0401120 A1 einen Roboter, der sich mithilfe von gelenkig ausgebildeten Beinen an der Außenseite von Gebäuden fortbewegen kann. Hierbei kann er mit Werkzeugen ausgestattet werden, die die Gebäudeoberfläche bearbeiten. Die Festlegung des Roboters am Gebäude erfolgt hierbei mithilfe von Saugnäpfen. Auch die deutsche Patentanmeldung DE 10219740 A1 zeigt und beschreibt eine Vorrichtung, die sich mithilfe von Saugnäpfen über beliebig geneigte Oberflächen bewegen kann, um Reinigungsaufgaben, Farbauftrag, Oberflächenprüfung oder Wartungsarbeiten an der Außenseite von Gebäuden auszuführen. Auch die US 8534395 B2 offenbart einen Reinigungsroboter, der mit Saugnäpfen an einer Fassade festgelegt wird.

Während die Festlegung der genannten Vorrichtungen des Standes der Technik mithilfe von Saugnäpfen für die Behandlung von glatten Oberflächen, insbesondere vom Glasfassaden, geeignet ist, ist diese Art der Festlegung jedoch für die eingangs genannten Arbeiten auf porösen, beispielsweise verputzten Wänden bei der Errichtung und Sanierung von Außenwänden von Gebäuden, die auch das Auftragen oder Abtragen von Verputz oder das Aufbringen von Dämmmaterial umfassen, jedoch nicht geeignet, da Saugnäpfe auf porösen Materialien wie Verputz, Beton oder Ziegel nicht den nötigen Halt finden.

Es ist daher die Aufgabe der vorliegenden Erfindung, eine Vorrichtung der eingangs genannten Art zu schaffen, die sich für die genannten Arbeiten eignet. Insbesondere soll auch ein sicherer Halt der Vorrichtung an unebenen und porösen Außenwänden oder anderen Wände von Gebäuden ermöglicht werden. Weiters soll die Wirtschaftlichkeit des Einsatzes der erfindungsgemäßen Vorrichtung dadurch gesteigert werden, dass die Vorrichtung zur Bearbeitung großer Abschnitte eines Gebäudes, insbesondere einer Wand eines Gebäudes geeignet ist, sodass sich die Vorrichtung nicht ständig fortbewegen muss, um die Wand des Gebäudes in weiten Teilen bearbeiten zu können.

Zur Lösung dieser Aufgabe umfasst die Vorrichtung der eingangs genannten Art einen Rahmen mit zumindest einer am Rahmen festgelegten Werkzeugeinheit sowie eine Mehrzahl von am Rahmen angreifenden und unabhängig voneinander verschwenkbaren Trägerarmen zur Festlegung und Abstützung des Rahmens am Gebäude, wobei die Trägerarme jeweils ein Verbindungselement aufweisen, und die Verbindungselemente jeweils mit einem Wandanker aus einer Mehrzahl von Wandankern lösbar verbindbar sind, wobei die Wandanker zur Verankerung am Gebäude ausgebildet sind.

Die erfindungsgemäße Vorrichtung setzt somit eine Mehrzahl von Wandankern voraus, die am Gebäude verankert werden und in der Folge mit den Verbindungselementen, die am Ende der Trägerarme angeordnet sind, in eine wiederum lösbare Verbindung gebracht werden können. Auf diese Weise wird der Rahmen der erfindungsgemäßen Vorrichtung, durch die feste Verankerung der Wandanker beispielsweise durch Einschrauben der Anker in die Wand des Gebäudes oder vorübergehendes Einzementieren der Wandanker in das Gebäude, zuverlässig verankert, ohne dass glatte Oberflächen zum Festsaugen von Saugnäpfen vorhanden sein müssen.

Durch die Mehrzahl von Wandankern können die Verbindungselemente an den Trägerarmen je nach gewünschter Position der Vorrichtung an der Wand des Gebäudes einzeln und nacheinander von einmal zur Festlegung an einem Abschnitt der Wand eines Gebäudes benutzten Wandankern gelöst werden und die Verbindungselemente können einzeln und nacheinander weitere an der Wand des Gebäudes festgelegte Wandanker benutzen, um den Rahmen an einem neben einem bereits bearbeiteten Fassadenabschnitt des Gebäudes erneut festzulegen.

Auf diese Weise wird eine kletterfähige Robotervorrichtung geschaffen, deren Einsatzbereich nur durch die Notwendigkeit der Verankerung von Wandankern begrenzt ist, wobei jedoch keine durchgehenden und aufeinander abgestützten Gerüststrukturen aufgebaut werden müssen, um die erfindungsgemäße Vorrichtung sicher auf der Fassade zu verankern. Auf diese Weise können mit sehr geringem Materialaufwand auch sehr große Fassaden mit einer einzigen Vorrichtung bearbeitet werden. Die Bearbeitung kann hierbei bevorzugt automatisiert erfolgen, sofern ausreichend detaillierte Daten vorliegen, die den IST-Zustand und den SOLL-Zustand beschreiben und sofern die abhängig davon nötigen Arbeitsschritte vorab konkret planbar und somit in Form einer entsprechenden Programmierung der Steuerung der erfindungsgemäßen Vorrichtung zuführbar sind.

Dadurch, dass die Verankerung des Rahmens über die Trägerarme und die Verbindungsmittel über speziell ausgebildete und entsprechend im Gebäude verankerte Wandanker erfolgt, kann der Rahmen zum einen je nachdem, wie fest die Wandanker verankert werden können, sehr groß und stabil auch relativ robust und folglich leistungsfähig ausgebildet werden, um entsprechende Werkzeuge an der Werkzeugeinheit zu tragen und zum Einsatz zu bringen.

Gemäß einer bevorzugten Ausführungsform der vorliegenden Erfindung sind die Verbindungselemente als Greifer zum Ergreifen der Wandanker ausgebildet, wobei bevorzugt die Greifer an ihren Greifflächen eine zu einer Außenkontur der Wandanker komplementäre Kontur aufweisen. Bei dieser bevorzugten Erfindungsvariante erfolgt somit eine formschlüssige und bevorzugt auch kraftschlüssige Befestigung der Trägerarme und somit auch des Rahmens an den Wandankern. Die Wandanker können eine entsprechende Außenkontur aufweisen, die das Ergreifen der Wandanker durch die Trägerarme begünstigt. Eine solche bevorzugte Außenkontur kann beispielsweise dann gegeben sein, wenn die Wandanker einen erweiterten, wie z.B. scheibenförmigen oder pilzförmigen, Kopf aufweisen, der von Greifern mit einer entsprechenden Kontur der Greifflächen ergriffen werden kann.

Alternativ oder zusätzlich können die Verbindungselemente magnetisch mit den Wandankern verbindbar sein, wie dies einer bevorzugten Ausführungsform der vorliegenden Erfindung entspricht.

Um den Rahmen der erfindungsgemäßen Vorrichtung jederzeit und je nach den Erfordernissen des jeweiligen Bearbeitungsschritts in einem geeigneten Abstand von der Wand des zu bearbeitenden Gebäudes zu halten, kann die Erfindung gemäß einer bevorzugten Ausführungsform dahingehend weitergebildet sein, dass die Trägerarme als Parallel-Knickarme ausgebildet sind. Dies bedeutet, dass die Trägerarme mit zumindest drei um zueinander parallele Achsen schwenkenden Segmenten ausgebildet sind, sodass durch entsprechendes Einstellen der Beugungswinkel der Segmente der Trägerarme um die Gelenke zueinander ein Verbindungselement, insbesondere ein Greifer, einen Wandanker ergreifen kann und nach wie vor die Einstellung des Abstandes des Rahmens zum Gebäude über die Trägerarme ermöglicht ist. Alternativ oder zusätzlich können zu demselben Zweck die Trägerarme mit zumindest einem Teleskopelement ausgebildet sein, wie dies einer bevorzugten Ausführungsform der vorliegenden Erfindung entspricht.

Bevorzugt besteht der Rahmen aus einer Mehrzahl von Rahmenteilen, wobei die Rahmenteile einander an Verbindungsstellen der Rahmenteile kreuzend miteinander verbunden sind. Der Rahmen kann auf diese Weise modular aufgebaut sein und die Rahmenteile können je nach den jeweiligen statischen und kinematischen Erfordernissen entsprechend dimensioniert sein, wobei der modulare Aufbau des Rahmens insbesondere auch dahingehend als vorteilhaft zu betrachten ist, als aus sehr langen Rahmenteilen ein Rahmen aufgebaut werden kann, der einen sehr großen Bereich einer Fassade abdecken kann, ohne dass der Transport des Rahmens in seinen Einzelteilen problematisch wäre. Die Trägerarme bilden hierbei weitere Module der erfindungsgemäßen Vorrichtung und werden an den für den jeweiligen Einsatzzweck zur Anwendung gebrachten Rahmenteilen festgelegt.

Gemäß einer bevorzugten Ausführungsform der vorliegenden Erfindung sind die Rahmenteile an den Verbindungsstellen zueinander verfahrbar, bevorzugt unabhängig voneinander verfahrbar. Gemäß dieser Variante der Erfindung stellt der Rahmen auch im funktionalen Zustand eine bewegliche und dynamische Struktur dar, die es zusammen mit den unabhängig voneinander verschwenkbaren Trägerarmen gestattet, die erfindungsgemäße Vorrichtung über weite Bereiche der Fassade eines Gebäudes, die mit entsprechenden Wandankern besetzt sind, zu bewegen. Die entsprechende Schrittweite der erfindungsgemäßen Vorrichtung wird hierbei aus einem kombinierten Verfahren der Rahmenteile an den Verbindungsstellen und einem entsprechenden Verschwenken der Trägerarme bereitgestellt.

Der Rahmen spannt hierbei eine Ebene auf, in der ein Arbeitsraum für die Werkzeugeinheit geschaffen wird.

Gemäß einer bevorzugten Ausführungsform der vorliegenden Erfindung ist die zumindest eine Werkzeugeinheit auf einer entlang zweier einander gegenüberliegenden Rahmenteilen verfahrbaren Schiene angeordnet, wobei bevorzugt die Werkzeugeinheit entlang der Schiene verfahrbar ist. Dies gestattet es, mit einem großen Rahmen einen großen Bereich der Wand des Gebäudes abzudecken und die Werkzeugeinheit auf der Schiene zum jeweiligen Ort der Bearbeitung des Gebäudes zu verfahren. Der Rahmen bleibt somit für eine gewisse Zeit ortsfest am Gebäude verankert, während die Werkzeugeinheit entsprechend verschoben wird, bis der gesamte vom Rahmen abgedeckte Bereich bzw. Arbeitsraum dem entsprechenden Bearbeitungsschritt unterzogen worden ist und sich die erfindungsgemäße Vorrichtung mithilfe der Trägerarme zu einem der benachbarten Wandanker in der Gebäudeoberfläche weiter bewegen muss. Die erfindungsgemäße Vorrichtung kann sich hierbei nicht nur an den Wandankern entlang translatorisch bewegen, sondern sich durch geeignete Steuerung der Trägerarme beispielsweise um 90° drehen, sodass die Werkzeugeinheit an der Schiene je nach Bedarf optimal zum Einsatz gelangen kann. Die Schiene kann hierbei als Modul aus einer Mehrzahl von vorhandenen Schienen ausgewählt werden und bildet somit ein weiteres Modul der erfindungsgemäßen Vorrichtung und wird an den für den jeweiligen Einsatzzweck zur Anwendung gebrachten Rahmenteilen festgelegt.

Die Erfindung kann gemäß einer bevorzugten Ausführungsform dahingehend weitergebildet sein, dass die Werkzeugeinheit normal zu einer von dem Rahmen aufgespannten Ebene verfahrbar ist. Dies dient dazu, ein Werkzeug der Werkzeugeinheit in unterschiedlichen Abständen positionieren zu können, sodass beispielsweise auch weiter aus der Gebäudewand auskragende Strukturen wie beispielsweise Fensterleibungen geschaffen und/oder bearbeitet werden können.

Bevorzugt sind die Rahmenteile als Führungsschienen ausgebildet, was es zum einen ermöglicht, auf in der Industrie bereits vorhandene Standardbauteile zurückzugreifen, um den Rahmen der erfindungsgemäßen Vorrichtung zu realisieren und zum anderen kann das Verfahren der Rahmenteile zueinander an Führungsschienen durch entsprechende Eingriffsmittel und einfache Antriebsmittel realisiert sein.

Um die Bearbeitung der Wand, wie z.B. einer Außenwand, des Gebäudes mit der erfindungsgemäßen Vorrichtung entsprechend planen, steuern und überwachen zu können, ist es gemäß einer bevorzugten Ausführungsform der vorliegenden Erfindung vorgesehen, dass die Vorrichtung weiters eine Sensoreinheit umfasst zum berührungslosen Erfassen von Struktur- und/oder Farbeigenschaften des Gebäudes, wobei die Sensoreinheit, bevorzugt drahtlos, mit einer Steuereinheit am Rahmen zusammenwirkt. Die Sensoreinheit wird hierbei in der Nähe der betreffenden Wand des Gebäudes angeordnet, um das Gebäude entsprechend erfassen zu können. Die Steuereinheit der erfindungsgemäßen Vorrichtung wird beim Bearbeiten in Abhängigkeit von den geplanten Bearbeitungsdaten der Planungssoftware und den von der Sensoreinheit erhobenen Informationen mit Daten versorgt, um in der Folge die Bewegungen der Werkzeugeinheit, der Schiene, der Rahmenteile, der Trägerarme und der Verbindungselemente, wie beispielsweise der Greifer, geeignet zu steuern.

Hierbei umfasst die Sensoreinheit bevorzugt zumindest einen Sensor ausgewählt aus der Gruppe bestehend aus einer Kamera, bevorzugt einer Wärmebildkamera, einem Echolot, einem Laserentfernungsmesser und einem LIDAR-Sensor. Diese Sensoren gestatten es, die Form der Wand, deren Oberflächenbeschaffenheit, deren Wärmeverluste und Ähnliches zu messen und die Arbeitsschritte von der Werkzeugeinheit in Abhängigkeit von den erhobenen Eigenschaften durchzuführen.

Gemäß einer bevorzugten Ausführungsform der vorliegenden Erfindung weist die zumindest eine Werkzeugeinheit ein Werkzeug auf, welches ausgewählt ist aus der Gruppe bestehend aus einer Farbsprüheinheit, einer Schaumsprüheinheit, einer Klebstoffsprüheinheit, einem Bohrer, einem Schrauber, insbesondere einem Magazinschrauber, einem Stemmwerkzeug, einem Sägewerkzeug, einem Brenner, einem Druckluftnagler, einem Fräser, einer Schleifeinheit, einer Glätteinheit, einer Mörtelauftrageinheit, einem Füllwerkzeug und einem Prägewerkzeug. Es ist weiters denkbar, dass die zumindest eine Werkzeugeinheit eine Vielzahl von anderen Werkzeugen aufweist, die zur Bearbeitung von Außenwänden von Gebäuden nützlich sein können.

Das erfindungsgemäße System umfasst eine Vorrichtung wie soeben beschrieben sowie eine Mehrzahl von Wandankern, die zur Verankerung an einem Gebäude ausgebildet sind. Die Verankerung kann dabei direkt durch Einschrauben der Wandanker in die Gebäudewand erfolgen oder aber es wird ein Rahmen am Gebäude festgelegt, an dem wiederum die Wandanker festgelegt werden.

Die Erfindung wird nachfolgend anhand eines in der Zeichnung schematisch dargestellten Ausführungsbeispiels näher erläutert. In dieser zeigen Figur 1 eine perspektivische Darstellung der erfindungsgemäßen Vorrichtung, Figur 2 eine perspektivische Ansicht eines Trägerarms, die Figuren 3a bis 3c Draufsichten auf die erfindungsgemäße Vorrichtung in verschiedenen Phasen der Bewegung über eine Außenwand des Gebäudes und Figur 4 die Anordnung der erfindungsgemäßen Vorrichtung an einem Gebäude.

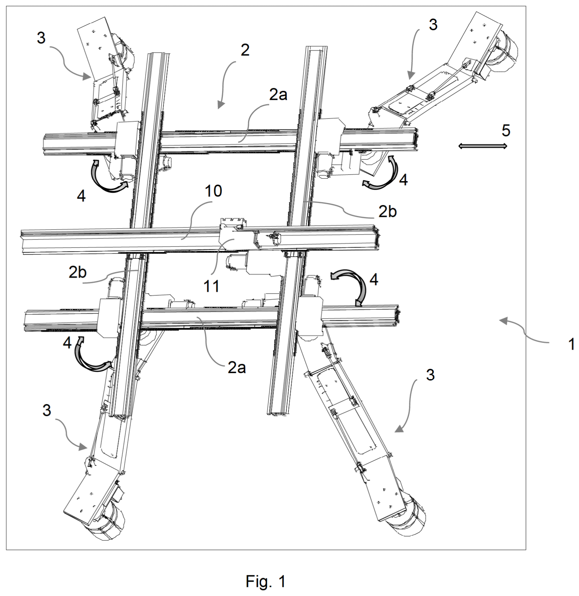

In Figur 1 ist die erfindungsgemäße Vorrichtung mit dem Bezugszeichen 1 bezeichnet. Die Vorrichtung 1 umfasst einen Rahmen 2, der aus einer Mehrzahl von horizontalen Rahmenteilen 2a und vertikalen Rahmenteilen 2b besteht. Am Rahmen 2 sind vier Trägerarme 3 festgelegt, die im Sinne der Doppelpfeile 4 verschwenkbar am Rahmen festgelegt sind. Die Rahmenteile 2a und 2b sind zueinander jeweils im Sinne der Doppelpfeile 5 und 6 entlang der Horizontalen beziehungsweise entlang der Vertikalen verfahrbar, sodass der Rahmen 2 unterschiedliche Spannweiten einer Außenwand eines Gebäudes überspannen kann.

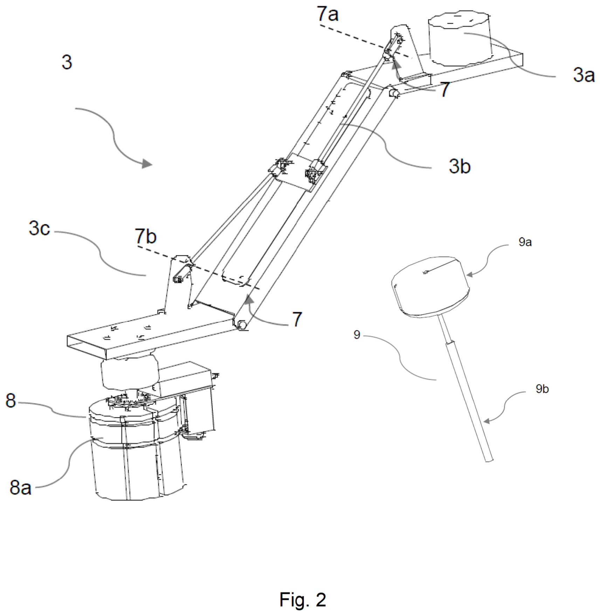

Wo dies möglich und sinnvoll ist, sind in Figur 2 und den weiteren Figuren gleiche oder einander entsprechende Elemente mit gleichen Bezugszeichen versehen.

In der Detailansicht gemäß Figur 2 ist zu erkennen, dass ein Trägerarm 3 aus zumindest drei Segmenten 3a, 3b und 3c besteht, die zueinander um zwei Gelenke 7 verschwenkbar sind, wobei die Achsen 7a und 7b der Gelenke 7 parallel zueinander verlaufen. Auf diese Weise wird der Trägerarm 3 als Parallel-Knickarm realisiert, sodass der Greifer 8, der das Verbindungselement des Trägerarms 3 darstellt, immer parallel zur Außenwand des Gebäudes zur Wirkung gebracht werden kann. Ein Wandanker ist mit dem Bezugszeichen 9 bezeichnet und besteht im Wesentlichen aus einem scheibenförmigen Konturabschnitt 9a und einem Verankerungsabschnitt 9b in Form einer Gewindestange, wobei die Gewindestange 9b in jeder geeigneten Art und Weise in die Außenwand des Gebäudes eingebracht werden kann, um den Wandanker 9 sicher am Gebäude festzulegen. In Figur 2 ist zu erkennen, dass der Greifer 8 eine entsprechend der Kontur des Abschnitts 9a entsprechende Kontur an den Greifelementen 8a aufweist, um den Abschnitt 9a des Wandankers 9 sicher umfassen und greifen zu können.

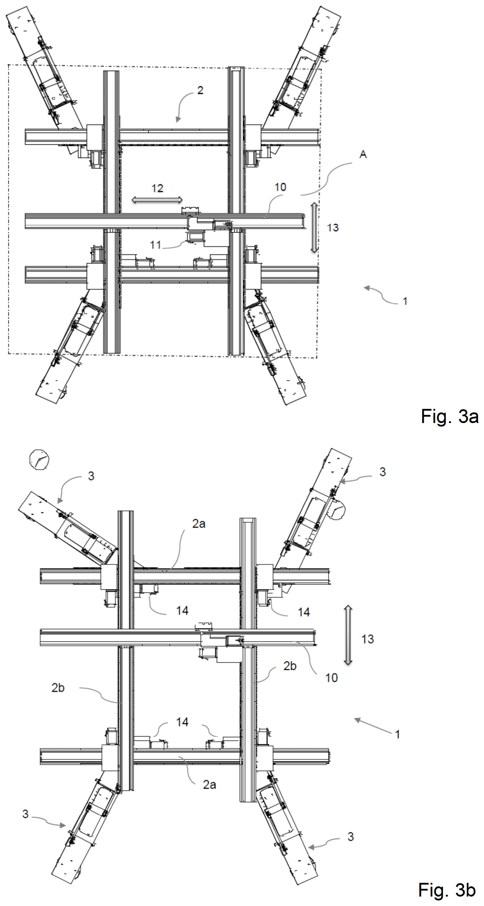

In Figur 3a ist nun die erfindungsgemäße Vorrichtung in einer Arbeitsposition dargestellt, in der der Rahmen 2 einen gewissen Bereich überspannt und die Schiene 10 sich in einer gewissen Position befindet, um die Werkzeugeinheit 11, die an der Schiene 10 in Richtung des Doppelpfeils 12 verfahrbar ist, entsprechend zur Wirkung zu bringen. Die Schiene 10 ist im Sinne des Doppelpfeils 13 verfahrbar, sodass die Werkzeugeinheit 11 den gesamten vom Rahmen 2 überspannten Bereich A, der in Figur 3a durch die strichlierten Linien versinnbildlicht ist, bearbeiten kann.

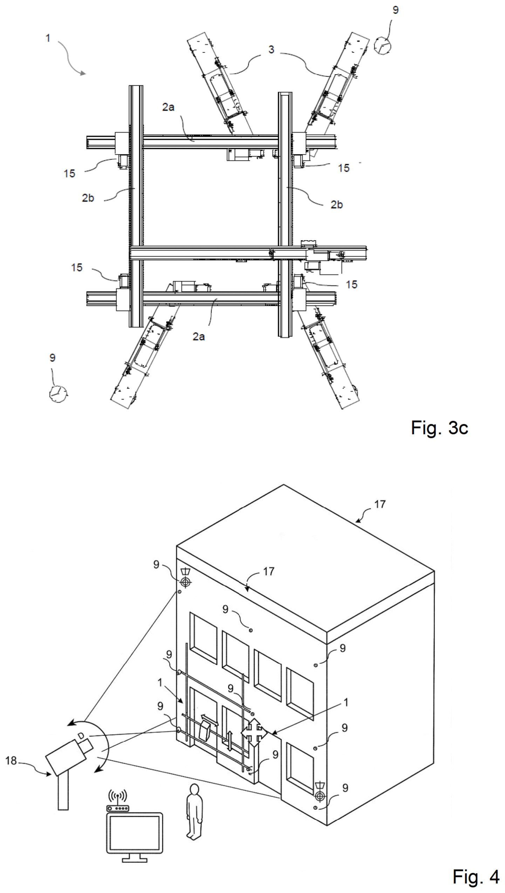

In Figur 3b ist eine alternative Position der Schiene 10 dargestellt. Mit den Bezugszeichen 14 sind Antriebe bezeichnet, mit denen die Trägerarme 3 entlang der Rahmenteile 2a und 2b verfahren werden können. In Figur 3c ist weiteres zu erkennen, dass die vertikalen Rahmenteile 2b mithilfe der Antriebe 15 in eine weiter ausladende Position an oberen horizontalen Rahmenteil 2a verfahren wurden. Die oberen Trägerarme 3 befinden sich in der in Figur 3c dargestellten Situation bereits in der rechten Hälfte des oberen horizontalen Rahmenteils 2a, sodass ein Wandanker 9, der sich ursprünglich außerhalb der Reichweite des rechten oberen Trägerarms 3 befunden hat, nun erreicht werden kann. Auf diese Weise kann sich die erfindungsgemäße Vorrichtung 1 über die gesamte Außenwand eines Gebäudes bewegen.

In Figur 4 ist schließlich zu erkennen, dass unter Umständen nur wenige Wandanker 9 ausreichen, um den Rahmen 2 der erfindungsgemäßen Vorrichtung 1 über eine Außenwand 16 eines Gebäudes 17 bewegen zu können. Eine Sensoreinheit ist mit dem Bezugszeichen 18 bezeichnet und die Sensoreinheit 18 ist entsprechend angeordnet, um die Außenwand 16 des Gebäudes 17 zu vermessen und zu erfassen und entsprechende Informationen an eine Steuereinheit der erfindungsgemäßen Vorrichtung zu übertragen.

## Patentansprüche

1. Vorrichtung zur Bearbeitung eines Gebäudes (17), insbesondere einer Wand (16) eines Gebäudes (17), die Vorrichtung (1) umfassend einen Rahmen (2) mit zumindest einer am Rahmen (2) festgelegten Werkzeugeinheit (11) sowie eine Mehrzahl von am Rahmen (2) angreifenden und unabhängig voneinander verschwenkbaren Trägerarmen (3) zur Festlegung und Abstützung des Rahmens (2) am Gebäude (17), wobei die Trägerarme (3) jeweils ein Verbindungselement (8) aufweisen, und die Verbindungselemente (8) jeweils mit einem Wandanker (9) aus einer Mehrzahl von Wandankern (9) lösbar verbindbar sind.

2. Vorrichtung nach Anspruch 1, **dadurch gekennzeichnet, dass** die Verbindungselemente (8) als Greifer (8) zum Ergreifen der Wandanker (9) ausgebildet sind, wobei bevorzugt die Greifer (8) an ihren Greifflächen eine zu einer Außenkontur der Wandanker (9) komplementäre Kontur aufweisen.

3. Vorrichtung nach Anspruch 1 oder 2, **dadurch gekennzeichnet, dass** die Verbindungselemente (8) magnetisch mit den Wandankern (9) verbindbar sind.

4. Vorrichtung nach Anspruch 1, 2 oder 3, **dadurch gekennzeichnet, dass** die Trägerarme (3) als Parallel-Knickarme (3) ausgebildet sind.

5. Vorrichtung nach einem der Ansprüche 1 bis 4, **dadurch gekennzeichnet, dass** die Trägerarme (3) mit zumindest einem Teleskopelement ausgebildet sind.

6. Vorrichtung nach einem der Ansprüche 1 bis 5, **dadurch gekennzeichnet, dass** der Rahmen (2) aus einer Mehrzahl von Rahmenteilen (2a, 2b) besteht, wobei die Rahmenteile (2a, 2b) einander an Verbindungsstellen der Rahmenteile (2a, 2b) kreuzend miteinander verbunden sind.

7. Vorrichtung nach Anspruch 6, **dadurch gekennzeichnet, dass** die Rahmenteile (2a, 2b) an den Verbindungsstellen zueinander verfahrbar sind, bevorzugt unabhängig voneinander verfahrbar sind.

8. Vorrichtung nach Anspruch 6 oder 7, **dadurch gekennzeichnet, dass** die zumindest eine Werkzeugeinheit (11) auf einer entlang zweier einander gegenüberliegenden Rahmenteilen (2b) verfahrbaren Schiene (10) angeordnet ist, wobei bevorzugt die Werkzeugeinheit (11) entlang der Schiene (10) verfahrbar ist.

9. Vorrichtung nach einem der Ansprüche 1 bis 8, **dadurch gekennzeichnet, dass** die Werkzeugeinheit (11) normal zu einer von dem Rahmen aufgespannten Ebene verfahrbar ist.

10. Vorrichtung nach einem der Ansprüche 6 bis 9, **dadurch gekennzeichnet, dass** die Rahmenteile (2a, 2b) als Führungsschienen ausgebildet sind.

11. Vorrichtung nach einem der Ansprüche 1 bis 10, **dadurch gekennzeichnet, dass** die Vorrichtung (1) weiters eine Sensoreinheit (18) umfasst zum berührungslosen Erfassen von Struktur- und/oder Farbeigenschaften des Gebäudes (17), wobei die Sensoreinheit (18), bevorzugt drahtlos, mit einer Steuereinheit am Rahmen (2) zusammenwirkt.

12. Vorrichtung nach Anspruch 11, **dadurch gekennzeichnet, dass** die Sensoreinheit (18) zumindest einen Sensor umfasst ausgewählt aus der Gruppe bestehend aus einer Kamera, bevorzugt einer Wärmebildkamera, einem Echolot, einem Laserentfernungsmesser und einem LIDAR-Sensor.

13. Vorrichtung nach einem der Ansprüche 1 bis 12, **dadurch gekennzeichnet, dass** die zumindest eine Werkzeugeinheit (11) ein Werkzeug aufweist, welches ausgewählt ist aus der Gruppe bestehend aus einer Farbsprüheinheit, einer Schaumsprüheinheit, einer Klebstoffsprüheinheit, einem Bohrer, einem Schrauber, insbesondere einem Magazinschrauber, einem Stemmwerkzeug, einem Sägewerkzeug, einem Brenner, einem Druckluftnagler, einem Fräser, einer Schleifeinheit, einer Glätteinheit, einer Mörtelauftrageinheit, einem Füllwerkzeug und einem Prägewerkzeug.

14. System umfassend eine Vorrichtung nach einem der Ansprüche 1 bis 13 und eine Mehrzahl von Wandankern, die zur Verankerung an einem Gebäude ausgebildet sind.
